# EUROPEAN PATENT SPECIFICATION

(11) **EP 1 013 480 B1**
(45) Date of publication and mention of the grant of the patent: **14.05.2003**
(21) Application number: 99125270.1
(22) Date of filing: 17.12.1999
(51) Int. Cl.: B60C 11/12, B60C 11/13

(54) **A tyre for vehicle wheels**
Ein Reifen für Fahrzeugräder
Un bandage pneumatique pour roues de véhicule

(30) Priority: 23.12.1998 EP 98830779
(43) Date of publication of application: 28.06.2000
(73) Proprietor: PIRELLI PNEUMATICI S.p.A., 20126 Milano (IT)
(72) Inventor: Caretta, Renato, 21013 Gallarate (Varese) (IT)
(74) Representative: Tansini, Elio Fabrizio

(56) References cited:
- EP-A- 0 788 900
- EP-A- 0 810 104
- DE-A- 3 943 014
- DE-A- 19 711 852
- FR-A- 809 470
- GB-A- 2 093 777
- US-A- 4 298 046
- US-A- 5 386 861
- US-A- 5 679 186

## Description

The present invention relates to a tyre for vehicle wheels of the type provided with a tread band comprising: a plurality of raised blocks each peripherally confined between at least two longitudinal grooves substantially extending circumferentially of the tyre, and at least two transverse grooves joining said longitudinal grooves; a first series of sipes and a second sipes formed in said blocks, each according to an inclined orientation relative to a direction normal to an outer rolling surface of the tread band, to divide each block into a plurality of flexible portions disposed circumferentially in side by side relationship, each having a grip edge in the form of an acute angle on said outer rolling surface.

In more detail, the invention is directed to a tyre of the so-called "winter" type and to a method of making such a tyre, the tread band of which has a tread pattern particularly suitable for running on snow-covered and/or frozen roadways.

Tyres of the winter type are required to have, -in addition to excellent behavioural features as regards running on a snow-covered roadway, also a good qualitative level in connection with other operation features such as rolling smoothness, running behaviour on a wet surface and kilometric yield.

Other features that, although of less importance than the preceding ones, also help in giving a better or worse qualitative evaluation of a winter tyre are running behaviour on a dry surface and quietness on running.

The above mentioned behavioural and operational features are determined by making appropriate circumferential and transverse grooves into the tread band, which grooves must be suitably sized and oriented, so as to give rise to formation of blocks normally aligned in rows disposed consecutively in side by side relationship and extending circumferentially of the tyre.

In addition, the presence of an appropriate lamelliform pattern in the blocks, i.e. a thick series of narrow cuts disposed consecutively in side by side relationship in a circumferential direction and oriented substantially transversely of the rolling direction is significant indispensable as regards achievement of particular behavioural running features on a snow-covered roadway.

The task of these narrow cuts, more simply called "sipes" is substantially that of picking up and efficiently retaining the snow, since friction created by snow against snow is, as known, greater than friction of rubber on snow.

In US Patent 4,298,046, herein mentioned as an example of the state of the most pertinent prior art, it is described a winter tyre the tread band of which has four circumferential rows of blocks, confined by substantially straight circumferential grooves and transverse grooves, straight as well, having walls substantially normal to an outer rolling surface, on which contact between the tread band and roadway surface occurs.

For the purpose of achieving improvements in terms of traction power and grip performance on braking it is provided that blocks belonging to the axially outer rows, located close to the tyre shoulders, should have sipes oriented according to an inclination of about 30° relative to the rolling surface and extending on the rolling surface itself according to a substantially straight extension parallel to the tyre rotation axis. Blocks belonging to the circumferential rows placed in the middle region of the tyre have sipes similar to those formed in the blocks belonging to the shoulder rows, but inclined in the opposite direction relative to the latter.

In each block, sipes define a plurality of flexible portions that, due to the inclination of the sipes themselves, exhibit a sharp-corner edge capable of exerting an efficient grip on the roadway surface. By assigning a given direction of rotation to the tyre, the acute-angle edges of the flexible portions belonging to the blocks of the shoulder rows are made efficient during the acceleration step, while the acute-angle edges of the flexible portions of the blocks belonging to the centre rows exert their efficiency during the braking step.

In Patent EP 498287 it is described a tyre in which the transverse grooves delimiting the tread band blocks have an inclined orientation relative to a direction normal to the rolling surface, in. order to improve evenness in wear of the blocks themselves. The transverse grooves belonging to the blocks of the circumferential shoulder rows have an opposite orientation relative to that of the blocks belonging to the centre rows. In addition a different direction of rotation is assigned to the tyre, depending on whether it is associated with a driving wheel or a driven wheel of the motor-vehicle.

In patent EP 384182 and in the Italian Patent Application MI94A000309 tyres for heavy duty vehicles are described which are provided with circumferential rows of blocks delimited by transverse cuts of reduced width having an inclined orientation relative to a direction normal to the rolling surface of the tread band.

In accordance with the present invention it has been found advantageous for the blocks in the tread band to be provided with sipes having an inclined orientation relative to the rolling surface and a curvilinear transverse extension, or in any case such arranged as to define a concavity turned towards the acute-angle grip edge exhibited by one of the two flexible portions delimited by the sipe itself. Thus the grip effect on traction and/or on braking is improved, above all on a snow-covered and/or frozen roadway, in that the consequent conformation of each flexible portion makes this portion substantially behave like a small shovel cutting and picking up the snow and accumulating and holding it at the inside of the sipe.

In more detail, it is an object of the present invention to provide a tyre for vehicle wheels, characterized in that each sipe extends transversely of the block according to a concave extension towards the grip edge of the corresponding flexible portion.

Preferably, sipes belonging to the first series and the second series are distributed in respective circumferential rows disposed axially in side by side relationship and advantageously arranged in an alternate sequence.

More particularly, each circumferential row of sipes belonging to the first and second series respectively is preferably associated with a respective circumferential row of blocks.

Advantageously, each sipe may be provided to extend transversely of the block substantially over the whole width thereof.

Each sipe may possibly have at least one end portion of reduced depth close to the longitudinal groove delimiting the respective block.

In a preferential embodiment, each sipe has a substantially curvilinear extension symmetric with the longitudinal centre line of the respective block.

In addition, each of said flexible portions may be provided to. have opposite ends inclined to the extension direction of the corresponding longitudinal grooves, to define side toothings projecting into the longitudinal grooves in said block.

In accordance with a further aspect of the invention application of which can also take place independently of the conformation of the transverse extension of the sipes, it has been found advantageous for each of said transverse grooves to be confined between a first side substantially normal to the outer rolling surface of the tread band, and a second side diverging from the first side towards the rolling surface itself.

Preferably said second side, relative to the rolling surface, has an orientation similar to or concordant with that of the sipes of the corresponding block.

It may be also provided that each block should have, close to said rolling surface, at least one transverse edge projecting towards the corresponding transverse groove to define an undercut with the second side of the transverse groove itself.

Advantageously, each of said transverse grooves extends in a direction substantially parallel to the extension of the sipes, and the transverse grooves belonging to blocks disposed mutually in side by side relationship in an axial direction are disposed consecutively so as to define substantially continuous transverse grooves extending according to an undulated extension.

It may be conveniently provided that each of said longitudinal grooves should be confined between a first side substantially normal to the rolling surface and a second side diverging from the first side in the direction of the rolling surface itself.

Each block may also have, close to the rolling surface, at least one longitudinal edge projecting towards the corresponding longitudinal groove, to define an undercut with the second side of the longitudinal groove itself.

Preferably, in each of said longitudinal grooves the mutual positioning of the first and second sides is inverted relative to the mutual positioning of the first and second sides of the circumferentially contiguous longitudinal grooves.

Conveniently, the longitudinal grooves are consecutively disposed so as to define substantially continuous circumferential grooves.

Preferably, each of said longitudinal grooves has an inclined extension relative to a direction circumferential to the tyre, so that each of said circumferential grooves extends in the form of a broken line.

In a preferential embodiment of the tyre in accordance with the invention, at least two circumferential rows of shoulder blocks are provided which extend close to the opposite side edges of the tread band, as well as one or more circumferential rows of centre blocks disposed symmetrically relative to an equatorial plane of the tyre, the blocks disposed on either side of the equatorial plane respectively having correspondingly opposite orientations.

In accordance with a different aspect, the invention relates to a method of increasing snow trapping in tread patterns for tyres of vehicle wheels, comprising the steps of: making rows of blocks, each confined between longitudinal and transverse grooves relative to a circumferential extension direction of the tyre; dividing each block into a plurality of flexible portions by a plurality of sipes extending inwardly of the tyre starting from a radially outer rolling surface; shaping said sipes into a concave line on said rolling surface; and inclining each sipe preferably at an angle included. between 20° and 35° relative to a straight line normal to the rolling surface.

Further features and advantages will become more apparent from the detailed description of a preferred non-exclusive embodiment of a tyre for vehicle wheels in accordance with the present invention. This description will be taken hereinafter with reference to the accompanying drawings, given by way of non-limiting example, in which:
- Fig. 1 is a fragmentary plan view illustrating a tread band of a tyre made in accordance with the present invention;
- Fig. 2 is a fragmentary perspective bottom view highlighting a block of the tread band, sectioned in a diametral plane relative to the rotation axis of the tyre;
- Fig. 3 is a representation similar to Fig. 2, highlighting the deformation undergone by the flexible portions of the block by effect of forces produced in the footprint;
- Figs. 4 and 5 show the profile in cross-section of the longitudinal grooves of the tread band, sectioned along lines IV and V in Fig. 1;
- Figs. 6 and 7 7 show the profile in section of the transverse grooves delimiting the blocks of the shoulder rows and the centre rows respectively in the tread band, sectioned along lines VI and VII in Fig. 1;
- Fig. 8 is a section taken along line VIII in Fig. 1, highlighting the profile in longitudinal section of a sipe.

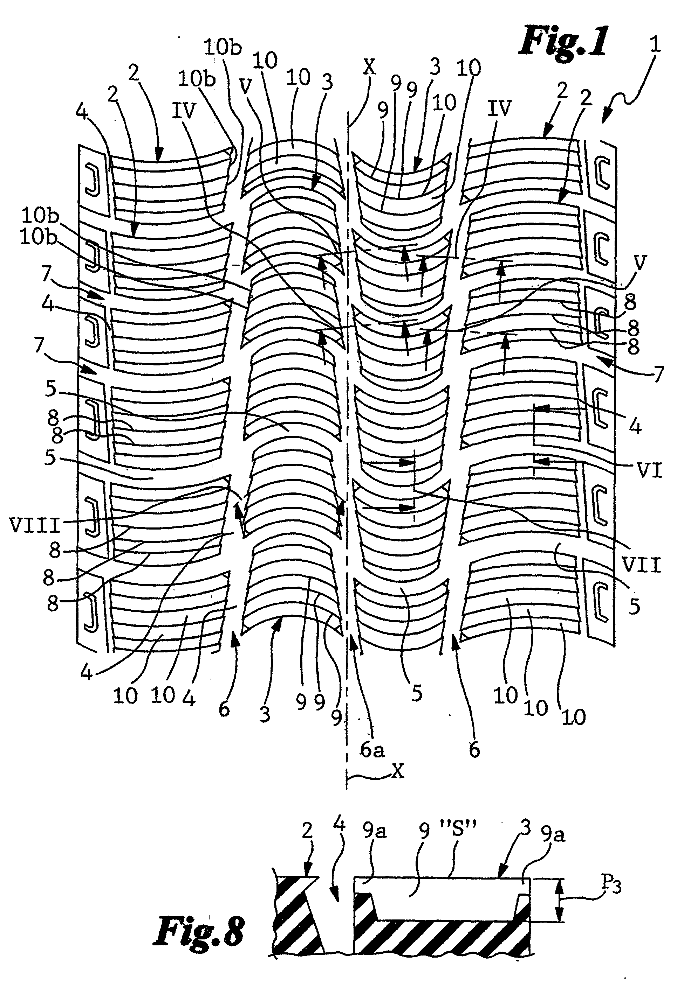

Referring particularly to Fig. 1, a tread band of a tyre made in accordance with the present invention has been generally identified by reference numeral 1, the remaining parts of the tyre being not shown as they can be obtained in any manner convenient for a person skilled in the art.

Defined on the tread band 1 is a plurality of raised blocks 2, 3 each peripherally confined between at least two longitudinal grooves 4 substantially extending circumferentially of the tyre, and at least two transverse grooves 5 meeting the longitudinal grooves 4. Preferably, the longitudinal grooves 4 are consecutively disposed along the circumferential extension of the tyre, to define substantially continuous circumferential grooves 6, 6a delimiting respective circumferential block rows 2, 3. In more detail, in the example shown, at least two circumferential side grooves 6 are defined which are symmetrically spaced apart from an equatorial median plane X-X of the tyre so as to delimit at least two shoulder block 2 rows, extending along the opposite side edges of the tread band 1, and one or more centre block 3 rows disposed symmetrically relative to the equatorial plane X-X. In the embodiment shown, the centre blocks 3 are divided into two circumferential rows separated by a central circumferential groove 6a disposed in the equatorial plane X-X.

In a preferential embodiment, the longitudinal grooves 4 have an orientation inclined to the circumferential extension direction, so that each of the circumferential 6 and central 6a grooves substantially extends in the form of a broken line.

By way of example, each longitudinal groove 4 has a depth P₁ included between 8 and 11 mm, and a width L₁ included between 5 and 8 mm measured on an outer rolling surface "S" of the tread band 1.

The transverse grooves 5 too have a depth P₂ included, just as an indication, between 8 and 11 mm, preferably equal to that of the longitudinal grooves 4, and a width L₂ included between 4.5 and 8.5 mm, progressively increasing larger on moving away from the equatorial plane X-X. In other words, the width of the transverse grooves 5 belonging to the shoulder blocks 2 is preferably greater than the width of the transverse grooves 5 belonging to the centre blocks 3.

As viewed from Fig. 1, the transverse grooves 5 belonging to the different block rows 2, 3 are consecutively disposed to define substantially continuous transverse grooves 7, of an undulated course, in such a manner that blocks 2, 3 disposed on either side of the equatorial plane X-X respectively are oriented in respectively opposite directions. In other words, it is preferably provided for the tread band 1 of the tyre in accordance with the invention to have a pattern of the symmetric bidirectional type, the behavioural features of which are not substantially affected by the direction of rotation imposed to the wheel.

Also provided is at least one first series of sipes 8 and a second series of sipes 9 formed in blocks 2, 3 with a depth P₃ close, just as an indication, to the depth P₁ of the longitudinal 4 and transverse 5 grooves. Sipes 8, 9 have a width preferably not exceeding 0.5 mm and are circumferentially spaced apart from each other of a value D₃ included, just as an indication, between 3 and 6 mm, so as to divide each block 2, 3 into a plurality of flexible portions 10 disposed circumferentially in side by side relationship. Sipes of the first and second series 8, 9 have each an orientation inclined at an angle α included between 20° and 35° and preferably equal to 25°, relative to a direction "n" normal to the rolling surface "S", so that each flexible portion 10 has an acute-angle grip edge 10a, on the rolling surface itself. Sipes 8, 9 belonging to the first and second series respectively are distinguishable from each other due to the fact that they have respectively opposite inclination directions.

Preferably, sipes 8, 9 belonging to the first and second series are distributed in respective circumferential rows disposed axially in side by side relationship, preferably in an alternate sequence. In more detail sipes 8, 9 belonging to each of the first and second series can be associated with each of the circumferential rows formed by blocks 2, 3 respectively, in such a manner that each block row 2, 3 has sipes 8, 9 oriented in the opposite direction relative to the sipes of the row or rows of adjacent blocks.

Advantageously, as viewed from Fig. 1, each sipe 8, 9 extends transversely of the respective block 2, 3 in a curvilinear extention substantially symmetric relative to the transverse centre line of the block itself, or at all events in such a manner that it has a generally concave extension towards the corresponding grip edge 10 exhibited by one of the two flexible portions 10 delimited by the sipe itself.

Preferably, each sipe 8, 9 substantially extends over the whole width of the respective block 2, 3. In any case, the possibility of providing sipes 8, 9 extending in the block 2, 3 only over part of its width is not to be excluded. In addition, as shown in Fig. 8, it may be also advantageously provided for each sipe 8, 9 to have at least its end portion 9a of reduced depth close to the longitudinal groove 4 delimiting the respective block 3. The depth of the sipe 8, 9 at the end portions 9a can be included, just as an indication, between a zero value and. half the depth P₃ of the cut itself.

The conformation and positioning of the sipes 8, 9 in accordance with the invention is adapted to greatly improve the grip effect of the tyre for the purpose of improving performance thereof, in particular on acceleration and braking.

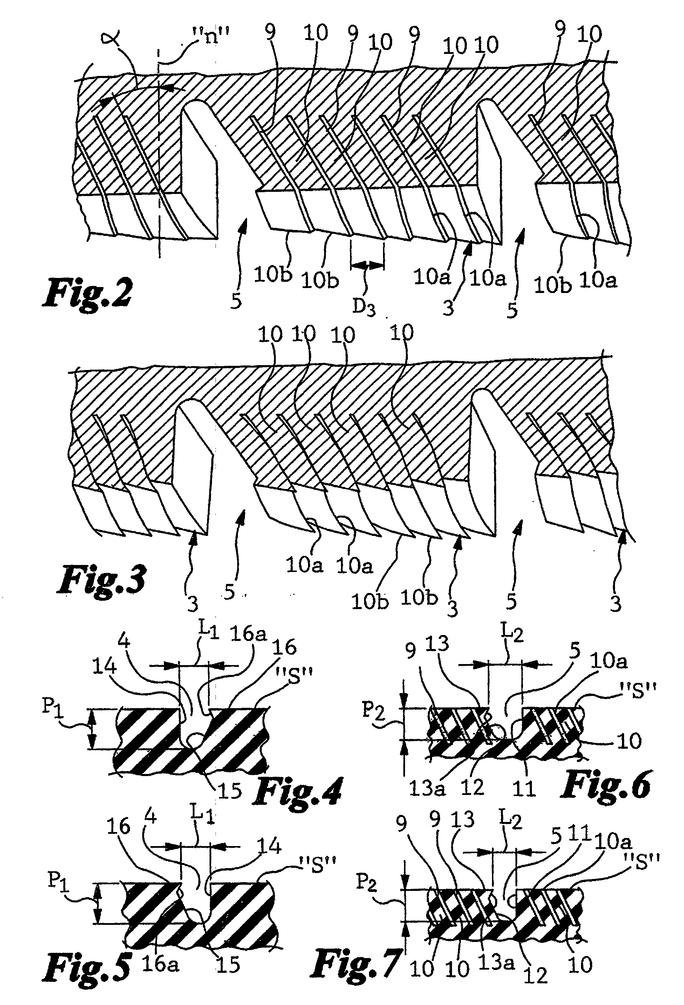

In fact, as can be seen from a comparison between Figs. 2 and 3, when the block 2, 3 is deformed due to deflection against the ground under the footprint the flexible portions 10 are deformed leading the respective grip edges 10a to project from the rolling surface "S" of the tread band 1. Under this circumstance specific pressures of high value are generated on the grip edges 10a, which will promote the tyre grip on the ground. This phenomenon is emphasized when, in the accelerating and braking steps, the ground transmits tangential forces to the block 2, 3, which are directed in the opposite direction to that towards which the acute angles formed by the grip edges 10a of the respective deformable portions 10 are turned. Being the sipes 8, 9 of the first and second series are oriented in opposite ways, both in an accelerating condition and in a braking condition there will be blocks 2 or 3 in the footprint the deformable portions of which are suitable for efficiently transmitting the involved tangential forces.

In addition, the concave extention of the transverse sipes 8, 9 is of such a nature that, mainly when a longitudinal sliding of block 2, 3 on a snow-covered or frozen roadway starts, the grip edges 10a of the flexible portions 10 tend to pick up and accumulate snow and ice towards the longitudinal centre line of the block itself, entrapping them at the inside of the sipe 8, 9. Thus a further favourable condition for transmission of tangential forces is determined, being the friction created by snow against snow greater than friction of rubber on snow. Snow and/or ice accumulation in the transverse sipes 8, 9 also emphasizes deformation of the flexible portions 10 and, therefore, projection of the grip edges 10a.

In accordance with a further aspect of the invention, in order to improve the tyre behaviour it may be advantageously provided that each transverse groove 5, preferably extending in a direction parallel to the extension of the sipes 8, 9 should be confined between a first side 11 substantially normal to the rolling surface "S" and a second side 12 diverging from the first side 11 in the direction of the rolling surface itself. Preferably, the second side 12 of each transverse groove 5 has an orientation parallel to, or at all events concordant with the orientation of the transverse groove 5 itself. Just as an indication, the second side 12 of each transverse hollow may define an angle of a value included between 20° and 35° relative to a direction normal to the rolling surface "S".

In this way each transverse groove 5 may be given an important width, which is advantageous for an efficient draining of water when the tyre is run on wet roadways, and the flexible portions 10 projecting into the groove itself may substantially have the same shape as that of the remaining flexible portions 10 or a similar one. This aspect is particularly advantageous also for even wearing of blocks 2, 3.

It may be also advantageously provided that each block 2, 3 should have, at the second side 12 of the respective transverse hollow 5, a transverse edge 13 projecting towards the inside of the groove itself. This transverse edge 13, located close to the rolling surface "S" advantageously forms an undercut 13a with the second side 12 of the transverse groove 5.

Under this circumstance the projecting edge 13 is adapted to supply a further grip seat on the ground, as well as to promote accumulation of snow and ice within the transverse groove 5, especially all when the block 2, 3 has a tendency to slide on the snow-covered surface in an opposite direction relative to the orientation of the respective grip edges 10a.

In a preferential embodiment, each of the longitudinal grooves 4 too is provided to be confined between a respective first side 14 substantially normal to the rolling surface "S" and a second side 15 diverging from the first side 14 preferably with an inclination included between 20° and 35°, in the direction of the rolling surface itself.

As can be viewed from a comparison between Figs. 4 and 5, taking into account the corresponding lines IV and V reproduced in Fig. 1, it is also preferably provided that the mutual positioning of the first and second sides 14 and 15 in each longitudinal groove 4'should be inverted relative to the configuration found in the circumferentially adjacent longitudinal grooves 4.

In addition, each block 2, 3 may have at least one longitudinal edge 16 projecting towards the respective longitudinal groove 4, so as to define an undercut 16a with the second side 15 of the longitudinal groove itself.

In order to further improve tractive power and braking performance of the tyre, each of the flexible portions 10 may be also provided to have one or both ends 10b thereof oriented obliquely relative to the longitudinal groove or grooves 4 delimiting the respective block 2, 3. Thus side toothings projecting into the longitudinal grooves 4 are defined in block 2, 3, the presence of said toothings improving the grip effect of the tyre on snow-covered roadways.

The present invention thus achieves the intended purposes.

The innovative expedients proposed by the invention in fact represent important improvements in terms of traction power and braking performance of the tyre, particularly due to the particular conformation and arrangement of the sipes.

The particular profile in section of the transverse and longitudinal grooves, also leaving out of consideration the curvilinear-extention conformation of the sipes, cooperates in a synergic manner with said sipes in improving the operating behaviour of the block with further improvements in terms of traction power and braking performance. In addition, the conformation of the longitudinal and transverse grooves ensures an excellent wearing evenness of the individual blocks, eliminating or at all events greatly restricting phenomena of early wear at the perimetral edges of the blocks themselves. The conformation of the longitudinal and transverse grooves in addition ensures an efficient water removal from the footprint when the tyre is run on a wet roadway.

The transverse 13 and longitudinal 16 projecting edges exhibited by blocks 2, 3 close to the rolling surface also help in improving tractive power and braking performance.

On the other hand, it is to note that said projecting edges are located at the block regions where, by effect of deformation of the flexible portions, the involved specific pressures are of a relatively moderate amount. Therefore corners formed by the projecting edges are not affected by localized early wearing phenomena.

## Claims

1. A tyre for vehicle wheels provided with a tread band (1) comprising:
- a plurality of raised blocks (2, 3) each peripherally confined between at least two longitudinal grooves (4) substantially extending circumferentially of the tyre, and at least two transverse grooves (5) meeting said longitudinal grooves (4);
- a first series of sipes (8) and a second series of sipes (9) formed in said blocks (2, 3), each according to an inclined orientation relative to a direction normal to an outer rolling surface (S) of the tread band (1), to divide each block (2, 3) into a plurality of flexible portions (10) disposed circumferentially in side by side relationship, each having a grip edge (10a) in the form of an acute angle on said outer rolling surface (S),
**characterized in that**
each sipe (8, 9) extends transversely of the block (2, 3) according to a concave extension towards the grip edge (10a) of the corresponding flexible portion (10).

2. A tyre as claimed in claim 1, wherein the sipes (8, 9) belonging to the first series and the second series are distributed in respective circumferential rows disposed axially in side by side relationship.

3. A tyre as claimed in claim 2, wherein the circumferential rows of sipes (8, 9) belonging to the first and second series respectively are mutually arranged in an alternate sequence.

4. A tyre as claimed in claim 2, wherein each circumferential row of sipes (8, 9) belonging to the first and second series respectively is associated with a respective circumferential row of blocks.

5. A tyre as claimed in claim 1, wherein each sipe (8, 9) extends transversely of the block substantially over the whole width thereof.

6. A tyre as claimed in claim 5, wherein each sipe (8, 9) has at least one end portion (9a) of reduced depth close to the longitudinal groove (4) delimiting the respective block (2, 3).

7. A tyre as claimed in claim 1, wherein each sipe (8, 9) has a substantially curvilinear extension symmetric with respect to the longitudinal centre line of the respective block.

8. A tyre as claimed in claim 1, wherein each of said flexible portions (10) has at. least one end (10b) inclined with respect to the extension direction of the corresponding longitudinal groove (4), to define in said block (2, 3) side toothings projecting into the longitudinal grooves (4).

9. A tyre for vehicle wheels as claimed in claim 1, **characterized in that** each of said transverse grooves (5) is confined between a first side (11) substantially normal to the outer rolling surface (S) of the tread band (1), and a second side (12) diverging from the first side towards the rolling surface itself.

10. A tyre as claimed in claim 9, wherein said second side (12), relative to the rolling surface (S), has an orientation concordant with that of the sipes (8, 9) of the corresponding block (2, 3).

11. A tyre as claimed in claim 9, wherein each block (2, 3), close to said rolling surface (S), has at least one transverse edge (13) projecting towards the corresponding transverse grove (5) to define an undercut (13a) with the second side (12) of the transverse grove itself.

12. A tyre as claimed in claim 9, wherein each of said transverse grooves (5) extends in a direction substantially parallel to the extension of the sipes (8, 9).

13. A tyre as claimed in claim 9, wherein the transverse grooves (5) belonging to blocks (2, 3) disposed mutually in side by side relationship in an axial direction are consecutively disposed so as to define substantially continuous transverse grooves (7) extending according to an undulated course.

14. A tyre as claimed in claim 9, wherein each of said longitudinal grooves (4) is confined between a first side (14) substantially normal to the rolling surface (S) and a second side (15) diverging from the first side (14) in the direction of the rolling surface itself.

15. A tyre as claimed in claim 14, wherein each of said blocks has, close to the rolling surface (S), at least one longitudinal edge (16) projecting towards the corresponding longitudinal groove (4), to define an undercut with the second side (15) of the longitudinal groove itself.

16. A tyre as claimed in claim 14, wherein in each of said longitudinal grooves (4) the mutual positioning of the first and second sides (14, 15) is inverted relative to the mutual positioning of the first and second sides of the circumferentially contiguous longitudinal grooves (4).

17. A tyre as claimed in claim 1, wherein said longitudinal grooves (4) are consecutively disposed so as to define substantially continuous circumferential grooves (6, 6a).

18. A tyre as claimed in claim 17, wherein each of said longitudinal grooves (4) has an inclined extension relative to a direction circumferential to the tyre, so that each of said circumferential grooves (6, 6a) extends in the form of a broken line.

19. A tyre as claimed in claim 1, wherein at least two circumferential rows of shoulder blocks (2) are provided, which extend close to the opposite side edges of the tread band (1), as well as one or more circumferential rows of centre blocks (3) disposed symmetrically relative to an equatorial plane (X-X) of the tyre, the blocks disposed on either side of the equatorial plane respectively having correspondingly opposite orientations.

20. A method of increasing snow trapping in tread patterns for tyres of vehicle wheels, comprising the steps of:
- making rows of blocks (2, 3), each confined between longitudinal (4) and transverse (5) grooves relative to a circumferential extension direction of the tyre,
- dividing each block (2, 3) into a plurality of flexible portions (10) by a plurality of sipes (8, 9) extanding inwardly of the tyre starting from a radially outer rolling surface (S);
- shaping said sipes (8, 9) according to a concave line on said rolling surface (S); and
- inclining each sipe (8, 9) preferably at an angle included between 20° and 35° relative to a straight line normal to the rolling surface (S).

## Patentansprüche

1. Reifen für Fahrzeugräder, die mit einem Laufflächenband versehen sind und
- eine Vielzahl von erhabenen Blöcken (2, 3), von denen jeder am Umfang zwischen wenigstens zwei Längsnuten (4), die sich im Wesentlichen am Umfang des Reifens erstrecken, und wenigstens zwei Quernuten (5) begrenzt ist, die sich mit den Längsnuten (4) treffen, und
- ausgebildet in den Blöcken (2, 3) eine erste Reihe von Lamellen (8) and eine zweite Reihe von Lamellen (9) aufweist, von denen jede eine geneigte Ausrichtung bezüglich einer Richtung senkrecht zu einer äußeren Abrollfläche (S) des Laufflächenbandes (1) zur Unterteilung jedes Blocks (2, 3) in eine Vielzahl von flexiblen Abschnitten (10), die am Umfang in einer Beziehung Seite an Seite angeordnet sind, und einen Griffrand (10a) in Form eines spitzen Winkels an der äußeren Abrollfläche (S) hat,
**dadurch gekennzeichnet,**
- **dass** sich jede Lamelle (8, 9) quer zum Block (2, 3) mit einer konkaven Erstreckung zum Griffrand (10a) des entsprechenden flexiblen Abschnitts (10) hin erstreckt.

2. Reifen nach Anspruch 1, bei welchem die zu der ersten Reihe und der zweiten Reihen gehörenden Lamellen (8, 9) jeweils in Umfangsreihen verteilt sind, die axial in einer Beziehung Seite an Seite angeordnet sind.

3. Reifen nach Anspruch 2, bei welchem die Umfangsreihen der zu der ersten bzw. zweiten Reihe gehörenden Lamellen (8, 9) wechselseitig in abwechselnder Sequenz angeordnet sind.

4. Reifen nach Anspruch 2, bei welchem jede Umfangsreihe von Lamellen (8, 9), die zu der ersten bzw. zweiten Reihe gehören, einer entsprechenden Umfangsreihe von Blöcken zugeordnet ist.

5. Reifen nach Anspruch 1, bei welchem jede Lamelle (8, 9) sich quer zum Block im Wesentlichen über dessen gesamter Breite erstreckt.

6. Reifen nach Anspruch 5, bei welcher jede Lamelle (8, 9) wenigstens einen Endabschnitt (9a) mit reduzierter Tiefe in der Nähe der Längsnut (4) hat, die den jeweiligen Block (2, 3) begrenzt.

7. Reifen nach Anspruch 1, bei welchem jede Lamelle (8, 9) eine im Wesentlichen gekrümmte Erstreckung hat, die zur Längsmittellinie des jeweiligen Blocks symmetrisch ist.

8. Reifen nach Anspruch 1, bei welchem jeder der flexiblen Abschnitte (10) wenigstens ein Ende (10b) hat, das bezüglich der Erstreckungsrichtung der entsprechenden Längsnut (4) geneigt ist, um in dem Block (2, 3) Seitenzahnungen auszubilden, die in die Längsnuten (4) vorstehen.

9. Reifen für Fahrzeugräder nach Anspruch 1, **dadurch gekennzeichnet, dass** jede der Quernuten (5) zwischen einer ersten Seite (11), die im Wesentlichen senkrecht zur äußeren Abrollfläche (S) des Laufflächenbandes ist, und einer zweiten Seite (12) begrenzt ist, die von der ersten Seite zu der Abrollfläche hin divergiert.

10. Reifen nach Anspruch 9, bei welchem die zweite Seite (12) bezüglich der Abrollfläche (S) eine Orientierung hat, die mit der der Lamellen (8, 9) des entsprechenden Blocks (2, 3) übereinstimmt.

11. Reifen nach Anspruch 9, bei welchem jeder Block (2, 3) in der Nähe der Abrollfläche (S) wenigstens einen Querrand (13) hat, der zu der entsprechenden Quemut (5) zur Bildung eines Hinterschnitts (13a) mit der zweiten Seite (12) der Quemut vorsteht.

12. Reifen nach Anspruch 9, bei welchem jede der Quemuten (5) sich in einer Richtung erstreckt, die im Wesentlichen parallel zur Erstreckung der Lamellen (8, 9) ist.

13. Reifen nach Anspruch 9, bei dem die zu den Blöcken (2, 3) gehörenden Quernuten (5), die zueinander wechselseitig in einer Beziehung Seite an Seite angeordnet sind, in Axialrichtung so aufeinanderfolgen, so dass im Wesentlichen durchgehende Quernuten (5) gebildet werden, die einen gewellten Verlauf haben.

14. Reifen nach Anspruch 9, bei welchem jede der Längsnuten (4) zwischen einer ersten Seite (14), die im Wesentlichen senkrecht zur Abrollfläche (S) ist, und einer zweiten Seite (15) begrenzt ist, die von der ersten Seite (14) in Richtung der Abrollfläche divergiert

15. Reifen nach Anspruch 14, bei welchem jeder der Blöcke nahe an der Abrollfläche (S) wenigstens einen Längsrand (16) hat, der zu der entsprechenden Längsnut (4) vorsteht, um eine Hinterschneidung mit der zweiten Seite (15) der Längsnut zu bilden.

16. Reifen nach Anspruch 14, bei welchem in jeder der Längsnuten (4) die gegenseitige Positionierung der ersten und zweiten Seite (14, 15) bezüglich der wechselseitigen Positionierung der ersten und zweiten Seite der am Umfang durchgehenden Längsnuten (4) umgekehrt ist.

17. Reifen nach Anspruch 1, bei welchem die Längsnuten (4) so aufeinanderfolgend angeordnet sind, dass sie im Wesentlichen durchgehende Umfangsnuten (6, 6a) bilden.

18. Reifen nach Anspruch 17, bei welchem jede der Längsnuten (4) eine geneigte Erstreckung bezüglich einer Umfangsrichtung zum Reifen hat, so dass jede der Umfangsnuten (6, 6a) sich in Form einer unterbrochenen Linie erstreckt.

19. Reifen nach Anspruch 1, bei welchem wenigstens zwei Umfangsreihen von Schulterblöcken (2), die sich nahe an die gegenüberliegenden Seitenränder des Laufflächenbandes (1) erstrecken, sowie eine oder mehrere Umfangsreihen von zentralen Blöcken (3) vorgesehen sind, die symmetrisch bezüglich einer Äquatorialebene (X-X) des Reifens angeordnet sind, wobei die jeweils auf jeder Seite der Äquatorialebene angeordneten Blöcken entsprechend entgegengesetzte Ausrichtungen haben.

20. Verfahren zur Erhöhung des Schneeeinschlusses in Laufflächenbandmustern für Reifen für Fahrzeugräder mit den Schritten:
- Herstellen von Reihen von Blöcken (2, 3), von denen jeder zwischen der Längs- (4) und Quernuten (5) bezüglich einer Umfangserstreckungsrichtung des Reifens begrenzt sind,
- Unterteilen jedes Blocks (2, 3) in eine Vielzahl von flexiblen Abschnitten (10) durch eine Vielzahl von Lamellen (8, 9), die sich im Reifen ausgehend von einer radial äußeren Abrollfläche (S) nach innen erstrecken,
- Ausbilden der Lamellen (8, 9) entsprechend einer konkaven Linie auf den Abrollfläche (S) und
- Neigen jeder Lamelle, vorzugsweise mit einem Winkel zwischen 20° und 35° bezüglich einer geraden Linie, die zur Abrollfläche (S) senkrecht ist.

## Revendications

1. Pneu pour roues de véhicule muni d'une bande de roulement (1) comprenant :
- une pluralité de blocs dressés (2, 3) confinés chacun de façon périphérique entre au moins deux rainures longitudinales (4) s'étendant substantiellement dans le sens de la circonférence du pneu, et au moins deux rainures transversales (5) qui rejoignent lesdites rainures longitudinales (4) ;
- une première série de lamelles (8) et une deuxième série de lamelles (9) formées dans lesdits blocs (2, 3), chacune selon une orientation inclinée par rapport à une direction normale à une surface extérieure de roulage (S) de la bande de roulement (1), pour diviser chaque bloc (2, 3) en une pluralité de parties flexibles (10) disposées circonférentiellement côte à côte, chacune comportant un bord adhérent (10a) sous la forme d'un angle aigu sur ladite surface extérieure de roulage (S),
**caractérisé en ce que** chaque lamelle (8, 9) s'étend dans le sens transversal du bloc (2, 3) selon une étendue concave vers le bord adhérent (10a) de la partie flexible (10) correspondante.

2. Pneu selon la revendication 1, dans lequel les lamelles (8, 9) appartenant à la première série et à la deuxième série sont réparties en rangées circonférentielles respectives disposées axialement côte à côte.

3. Pneu selon la revendication 2, dans lequel les rangées circonférentielles de lamelles (8, 9) appartenant respectivement aux première et deuxième séries sont mutuellement agencées en séquence alternée.

4. Pneu selon la revendication 2, dans lequel chaque rangée circonférentielle de lamelles (8, 9) appartenant respectivement aux première et deuxième séries est associée à une rangée de blocs circonférentielle respective.

5. Pneu selon la revendication 1, dans lequel chaque lamelle (8, 9) s'étend dans le sens transversal du bloc sur sensiblement toute la largeur de celui-ci.

6. Pneu selon la revendication 5, dans lequel chaque lamelle (8, 9) comporte au moins une partie d'extrémité (9a) de profondeur réduite près de la rainure longitudinale (4) délimitant le bloc respectif (2, 3).

7. Pneu selon la revendication 1, dans lequel chaque lamelle (8, 9) a une étendue sensiblement curviligne symétrique par rapport à l'axe longitudinal du bloc respectif.

8. Pneu selon la revendication 1, dans lequel chacune desdites parties flexibles (10) a au moins une extrémité (10b) inclinée par rapport à la direction d'extension de la rainure longitudinale (4) correspondante, pour définir dans ledit bloc (2, 3) des dentures latérales faisant saillie dans les rainures longitudinales (4).

9. Pneu pour roues de véhicule selon la revendication 1, **caractérisé en ce que** chacune desdites rainures transversales (5) est confinée entre un premier côté (11) sensiblement normal à la surface extérieure de roulage (S) de la bande de roulement (1), et un deuxième côté (12) s'écartant du premier côté vers la surface de roulage.

10. Pneu selon la revendication 9, dans lequel ledit deuxième côté (12) a, par rapport à la surface de roulage (S), une orientation qui concorde avec celle des lamelles (8, 9) du bloc (2, 3) correspondant.

11. Pneu selon la revendication 9, dans lequel chaque bloc (2, 3), près de ladite surface de roulage (S), comporte au moins un bord transversal (13) faisant saillie vers la rainure transversale (5) correspondante pour définir un dégagement (13a) avec le deuxième côté (12) de la rainure transversale.

12. Pneu selon la revendication 9, dans lequel chacune desdites rainures transversales (5) s'étend dans une direction sensiblement parallèle à la direction d'extension des lamelles (8, 9).

13. Pneu selon la revendication 9, dans lequel les rainures transversales (5) appartenant aux blocs (2, 3) disposés mutuellement côte à côte dans une direction axiale sont placés consécutivement de façon à définir des rainures transversales sensiblement continues (7) s'étendant suivant un parcours ondulé.

14. Pneu selon la revendication 9, dans lequel chacune desdites rainures longitudinales (4) est confinée entre un premier côté (14) sensiblement normal à la surface de roulage (S) et un deuxième côté (15) s'écartant du premier côté (14) dans la direction de la surface de roulage.

15. Pneu selon la revendication 14, dans lequel chacun desdits blocs comporte, près de la surface de roulage (S), au moins un bord longitudinal (16) faisant saillie vers la rainure longitudinale (4) correspondante, pour définir un dégagement avec le deuxième côté (15) de la rainure longitudinale.

16. Pneu selon la revendication 14, dans lequel dans chacune desdites rainures longitudinales (4) le positionnement mutuel des premier et deuxième côtés (14, 15) est inversé par rapport au positionnement mutuel des premier et deuxième côtés des rainures longitudinales (4) circonférentiellement contiguës.

17. Pneu selon la revendication 1, dans lequel lesdites rainures longitudinales (4) sont disposées consécutivement de façon à définir des rainures circonférentielles sensiblement continues (6, 6a).

18. Pneu selon la revendication 17, dans lequel chacune desdites rainures longitudinales (4) a une étendue inclinée par rapport à une direction circonférentielle au pneu, de sorte que chacune desdites rainures circonférentielles (6, 6a) s'étend sous forme d'une ligne brisée.

19. Pneu selon la revendication 1, dans lequel au moins deux rangées circonférentielles de blocs d'épaulement (2) sont prévues, qui s'étendent près des bords latéraux opposés de la bande de roulement (1), ainsi qu'une ou plusieurs rangées circonférentielles de blocs centraux (3) disposés symétriquement par rapport à un plan équatorial (X-X) du pneu, les blocs disposés de chaque côté du plan équatorial ayant respectivement des orientations opposées de manière correspondante.

20. Procédé d'augmentation du piégeage de la neige dans des sculptures de bande de roulement pour pneus de roues de véhiculé, comprenant les étapes consistant à :
- réaliser des rangées de blocs (2, 3), chacune confinée entre des rainures longitudinales (4) et transversales (5) par rapport à une direction d'extension circonférentielle du pneu,
- diviser chaque bloc (2, 3) en une pluralité de parties flexibles (10) par une pluralité de lamelles (8, 9) s'étendant vers l'intérieur du pneu en partant d'une surface de roulage radialement extérieure (S) ;
- mettre en forme lesdites lamelles (8, 9) selon une ligne concave sur ladite surface de roulage (S) ; et
- incliner chaque lamelle (8, 9) de préférence d'un angle compris entre 20° et 35° par rapport à une ligne droite normale à la surface de roulage (S).
